# EUROPEAN PATENT APPLICATION

(11) **EP 2 848 906 A1**
(43) Date of publication of application: **18.03.2015**
(21) Application number: 13837720.5
(22) Date of filing: 17.09.2013
(51) Int. Cl.: G01L 3/14

(54) **RELATIVE ROTATIONAL ANGLE DISPLACEMENT DETECTING DEVICE, TORQUE DETECTING DEVICE AND TORQUE CONTROL DEVICE USING SAID DETECTING DEVICE, AND VEHICLE PROVIDED WITH SAID CONTROL DEVICE**

(30) Priority: 14.09.2012 JP 2012202580
(71) Applicant: Yamaha Hatsudoki Kabushiki Kaisha, Iwata-shi, Shizuoka 438-8501 (JP)
(72) Inventor: TANAKA, Hiroshi, Iwata-shi Shizuoka 438-8501 (JP); NAKAMURA, Kazuto, Iwata-shi Shizuoka 438-8501 (JP)
(74) Representative: Grünecker, Kinkeldey, Stockmair & Schwanhäusser
(86) International application number: PCT/JP2013/074981
(87) International publication number: WO 2014/042268

(57) **Abstract**

The present application provides a relative rotational angular displacement detection device having a simple structure and configured to sense a relative rotational angular displacement of a pair of rotatable members that are rotationally movable relative to each other.

A permanent magnet is attached to one of a pair of rotatable members rotatable relative to each other in a circumferential direction of the axis of rotation. The permanent magnet includes magnetic poles arranged so as to alternate in polarity in the circumferential direction. A magnetic flux guiding ring including a ring body and a plurality of protruding portions that radially protrude from the ring body are attached to the other of the rotatable members. A plurality of magnetic sensors are provided to the ring body of the magnetic flux guiding ring. A first facing portion arranged to face a part of the ring body is configured to receive part of magnetic fluxes of the ring body. A second facing portion arranged at a position apart from the first facing portion with respect to the circumferential direction of the axis of rotation is configured to receive part of magnetic fluxes of the ring body. The first facing portion and the second facing portion are arranged such that their relative positions with respect to the circumferential direction of the axis of rotation are fixed independently of rotation of the permanent magnet and the magnetic flux guiding ring about the axis of rotation.

## Description

### Technical Field

The present invention relates to a relative rotational angular displacement detection device; a torque detection device and a torque control device including the relative rotational angular displacement detection device; and a power assist wheelchair, a power assist straddle-type vehicle, and a power steering device including the torque control device.

### Background Art

For example, in a conventional manual wheelchair, a pair of hand rims are arranged outside of a pair of right and left rear wheels, respectively. The pair of hand rims are provided to the rear wheels with the axis of rotation of the hand rims coaxial with the axis of an axle. When a user rotates the hand rims, the rotational force is transmitted to the rear wheels so that the manual wheelchair travels. Recently, in the wheelchair, for the purpose of reducing the burden on a user in moving the hand rim, a power assist system has been developed, in which the most appropriate assisting force corresponding to the manual force for moving the hand rim is transmitted to a driving wheel by an electric motor.

This kind of power assist system is provided with a detection device for sensing a torque by detecting a relative rotational angular displacement of a pair of rotatable members that are rotatable relative to each other and that are arranged with their axes of rotation coaxial with each other.

As a device for detecting such a relative rotational angular displacement or a relative rotational torque, the following device is disclosed (for example, see Patent Literature 1). The device includes a pair of first and second shaft members arranged with their axes of rotation coaxial with each other, a cylindrical magnet fixed to the first shaft member, a pair of yoke rings fixed to the second shaft member, a pair of magnetic flux collector rings each arranged so as to surround each yoke ring and each having a magnetic flux collecting projection, and a magnetic sensor arranged between the magnetic flux collecting projections and configured to detect a change in magnetic fluxes occurring in the yoke rings in accordance with a relative angular displacement of the first and second shaft members.

In the relative rotational angular displacement detection device having the above-described configuration, the first shaft member is provided with the cylindrical magnet that is coaxial with the first shaft member. The cylindrical magnet is configured to rotate together with the first shaft member. The cylindrical magnet includes magnetic poles (N-poles and S-poles) that are magnetized in a radial direction of an axis of rotation and arranged in the radial direction of the axis of rotation. The second shaft member is provided with the pair of yoke rings configured to rotate together with the second shaft member. Each yoke ring includes magnetic pole claws, the number of which is equal to the number of pairs of the N-poles and S-poles.

The magnetic pole claws are arranged outside of the cylindrical magnet such that each magnetic pole claw faces each magnetic pole of the cylindrical magnet with respect to the radial direction of the axis of rotation. The pair of yoke rings are arranged such that the magnetic pole claws of one of the yoke rings and the magnetic pole claws of the other of the yoke rings are opposed to each other with respect to an axial direction of the axis of rotation and arranged alternately with respect to a circumferential direction. The pair of magnetic flux collector rings each for collecting magnetic fluxes generated in each yoke ring are arranged outside of the corresponding yoke rings with respect to the radial direction of the axis of rotation. The two magnetic flux collector rings are arranged so as to surround the corresponding yoke rings.

When the first shaft member and the second shaft member are rotated relative to each other, the relative positions of the magnetic pole claws of each yoke ring relative to the magnetic poles of the cylindrical magnet are changed. This causes a change in magnetic fluxes between the magnetic flux collector rings. The change in magnetic fluxes is detected by the magnetic sensor.

### Citation List

### Patent Literature

PTL 1: Japanese Patent Application Laid-Open No. 2008-249366

### Summary of Invention

### Technical Problem

In the aforementioned detection device, the pair of yoke rings are provided so as to rotate together with the second shaft. On the other hand, the two magnetic flux collector rings are fixed to a housing. In other words, the pair of yoke rings are structured to rotate relative to the two magnetic flux collector rings. Therefore, for enabling a change in the magnetic flux density to be detected with a high degree of accuracy, each of the pair of yoke rings and the two magnetic flux collector rings is formed with an annular shape and they are arranged with a gap therebetween with respect to the radial direction of the axis of rotation. This, however, involves a problem of an increased cost for manufacturing and assembling the detection device, because each of the members is formed with an annular shape with the accuracy of the gap ensured.

The present invention has been made in view of the conventional problem described above. An object of the present invention is to provide a relative rotational angular displacement detection device, or the like, having a simple structure that can be manufactured and assembled easily and able to detect a relative rotational angular displacement with a high degree of accuracy.

### Solution to Problem

To solve the problem described above, the present invention adopts the following configurations.
(1) A relative rotational angular displacement detection device, including:
   a pair of rotatable members rotatable by 360 degrees about an axis of rotation, the rotatable members rotatable relative to each other about the axis of rotation in a circumferential direction;
   a permanent magnet attached to one of the pair of rotatable members so as to rotate with the one rotatable member, the permanent magnet including magnetic poles arranged so as to alternate in polarity in the circumferential direction of the axis of rotation;
   a magnetic flux guiding ring including a plurality of protruding portions and an annular ring body, the plurality of protruding portions arranged at positions facing the magnetic poles, the annular ring body attached to the other of the pair of rotatable members so as to rotate with the other rotatable member, the annular ring body arranged coaxially with the axis of rotation, the annular ring body magnetized with the strength of magnetization changing depending on the positions of the protruding portions relative to positions of the magnetic poles; and
   a magnetic detection unit configured to detect magnetic fluxes of the ring body, the magnetic detection unit including
      a first facing portion arranged to face a first part of the ring body and configured to receive magnetic fluxes of the first part of the ring body,
      a second facing portion arranged at a position apart from the first facing portion with respect to the circumferential direction of the axis of rotation, the second facing portion configured to receive magnetic fluxes of a second part of the ring body,
      a first magnetic sensor configured to detect the magnetic fluxes received by the first facing portion, and
      a second magnetic sensor configured to detect the magnetic fluxes received by the second facing portion,
      the first facing portion and the second facing portion configured such that their relative positions with respect to the circumferential direction of the axis of rotation are fixed independently of rotation of the permanent magnet and the magnetic flux guiding ring about the axis of rotation.

In the configuration of (1), the permanent magnet is attached to one of the pair of rotatable members rotatable relative to each other in the circumferential direction of the axis of rotation, in such a manner that the magnetic poles alternate in polarity in the circumferential direction of the axis of rotation. The plurality of protruding portions of the magnetic flux guiding ring are arranged so as to face the permanent magnet. Thus, the shape of the protruding portions of the magnetic flux guiding ring can be simple. This enables the protruding portions of the magnetic flux guiding ring to be formed with a high degree of accuracy. The strength of magnetization changes depending on a positional relation between the magnetic poles and the protruding portions facing each other (that is, the position of the protruding portion relative to the position of the magnetic pole). Setting the positional relation between the magnetic poles and the protruding portions is relatively easy. Therefore, assembling of members such as the magnetic flux guiding ring and the permanent magnet is easy. Accordingly, with a simple structure that can be manufactured and assembled easily, a relative rotational angular displacement of a pair of rotatable members rotatable relative to each other can be detected with a high degree of accuracy.

The magnetic detection unit detects magnetic fluxes of the ring body of the magnetic flux guiding ring magnetized in accordance with the relative positions of the protruding portions of the magnetic flux guiding ring relative to the magnetic poles of the permanent magnet. This enables reduction in the number of component parts, and thus achieves simplification of the structure. Since the structure is simple, manufacturing and assembling can be easily performed with a high degree of accuracy.

The magnetic detection unit includes the first facing portion, the second facing portion, the first magnetic sensor, and the second magnetic sensor. The first facing portion faces the first part of the ring body and configured to receive magnetic fluxes of the first part of the ring body. The second facing portion is arranged at a position apart from the first facing portion with respect to the circumferential direction of the axis of rotation, and configured to receive magnetic fluxes of a second part of the ring body. The first magnetic sensor detects the magnetic fluxes received by the first facing portion. The second magnetic sensor detects the magnetic fluxes received by the second facing portion. This enables reduction in the number of component parts, and thus achieves simplification of the structure. Since the structure is simple, manufacturing and assembling can be easily performed with a high degree of accuracy.

The first facing portion and the second facing portion are arranged such that their relative positions with respect to the circumferential direction of the axis of rotation are fixed independently of rotation of the permanent magnet and the magnetic flux guiding ring about the axis of rotation. The magnetic sensor can be installed in a non-rotatable side, for example, installed in a vehicle body. Thus, a simple structure is achieved. Since the magnetic sensor can be installed in a non-rotatable side such as the vehicle body, troubles such as breakdown are less likely to occur, which leads to detection of a relative rotational angular displacement of a pair of rotatable members with a high degree of accuracy.

Accordingly, the configuration of (1) provides a relative rotational angular displacement detection device having a simple structure that can be manufactured and assembled easily and able to detect a relative rotational angular displacement with a high degree of accuracy.
(2) The relative rotational angular displacement detection device according to (1), wherein
   the first facing portion and the second facing portion are arranged at such positions that the central angle formed between the first facing portion and the second facing portion satisfies a relational expression of [(the value in mechanical angle corresponding to one cycle in electrical angle of the permanent magnet) × N + (the value in mechanical angle corresponding to one cycle in electrical angle of the permanent magnet)/2, where N represents a positive integer].
   In the configuration of (2), in a situation where misalignment in relative rotation between the magnetic flux guiding ring and the permanent magnet is caused due to, for example, an error in the assembling process, a waveform obtained by combining outputs of the magnetic sensors has a lower amplitude than the amplitude of an output waveform of each magnetic sensor alone. Accordingly, fluctuations in the output of the magnetic detection unit that can cause an erroneous detection are suppressed. Thus, the accuracy of detection can be further improved.
(3) The relative rotational angular displacement detection device according to (1), wherein
   the magnetic detection unit includes M pieces of facing portions in addition to the first facing portion and the second facing portion,
   the facing portions are arranged at such positions that the angle formed between adjacent ones of the facing portions satisfies a relational expression of [(the value in mechanical angle corresponding to one cycle in electrical angle of the permanent magnet) × N + (the value in mechanical angle corresponding to one cycle in electrical angle of the permanent magnet)/(2+M), where N and M represent positive integers].
   In the configuration of (3), even when misalignment in relative rotation between the magnetic flux guiding ring and the permanent magnet is caused due to, for example, an error in the assembling process, a waveform obtained by combining outputs of the magnetic sensors has a lower amplitude than the amplitude of an output waveform of each magnetic sensor alone. Accordingly, fluctuations in the output of the magnetic detection unit that can cause an erroneous detection are suppressed. Thus, the accuracy of detection can be further improved.
(4) The relative rotational angular displacement detection device according to any one of (1) to (3), wherein
   the magnetic detection unit includes a first intermediate yoke and a second intermediate yoke, the first intermediate yoke arranged between the first magnetic sensor and the ring body so as to face the ring body, the second intermediate yoke arranged between the second magnetic sensor and the ring body so as to face the ring body,
   the first facing portion is provided at the first intermediate yoke,
   the second facing portion is provided at the second intermediate yoke,
   the first magnetic sensor is configured to detect magnetic fluxes that are received by the first facing portion provided at the first intermediate yoke,
   the second magnetic sensor is configured to detect magnetic fluxes that are received by the second facing portion provided at the second intermediate yoke.
   In the configuration of (4), the first intermediate yoke and the second intermediate yoke are provided. Accordingly, magnetic fluxes of the magnetic flux guiding ring can be collected, and the amplitude of magnetic fluxes that the ring body has directly received from the permanent magnet irrespective of the phase of the protruding portion can be averaged. This can further improve the accuracy of detection. Arranging each of the intermediate yokes between the corresponding magnetic sensor and the ring body allows, for example, the ring body to be arranged more outward with respect to the radial direction of the axis of rotation. This allows an increase in the inner diameter of the ring body, and a decrease in the size of the permanent magnet and the size of the distal end of each protruding portion. Thus, installation in the space is easy.
(5) The relative rotational angular displacement detection device according to any one of(1) to (4), wherein
   the first facing portion includes a first magnetic flux collecting portion for collecting magnetic fluxes to the first magnetic sensor,
   the second facing portion includes a second magnetic flux collecting portion for collecting magnetic fluxes to the second magnetic sensor.
   In the configuration of (5), magnetic fluxes can be efficiently collected to the magnetic sensors, thus achieving detection of a relative rotational angular displacement with a higher degree of accuracy.
(6) The relative rotational angular displacement detection device according to (5), wherein
   the first magnetic flux collecting portion and the second magnetic flux collecting portion are recessed portions recessed in a radial direction of the axis of rotation.
   The configuration of (6) achieves detection of a relative rotational angular displacement with a higher degree of accuracy.
(7) The relative rotational angular displacement detection device according to any one of (1) to (6), wherein
   the magnetic detection unit includes a first averaging part for averaging the amplitude of magnetic fluxes flowing toward the first magnetic sensor, and a second averaging part for averaging the amplitude of magnetic fluxes flowing toward the second magnetic sensor.
   In the configuration of (7), the amplitude of magnetic fluxes flowing from the permanent magnet directly through the ring body to each of the first magnetic sensor and the second magnetic sensor irrespective of the phase of the protruding portion can be averaged. Accordingly, detection of a relative rotational angular displacement with a higher degree of accuracy is achieved.
(8) The relative rotational angular displacement detection device according to any one of (1) to (7), wherein
   the magnetic detection unit is configured to detect magnetic fluxes of the ring body based on magnetic fluxes detected by the first magnetic sensor and magnetic fluxes detected by the second magnetic sensor.
   The configuration of (8) is able to enhance the accuracy of detection of the relative positions. The accuracy of detection of the relative positions can be further enhanced by, for example, arranging the magnetic sensors so as to satisfy such a positional relation that an output waveform obtained by combining outputs of the magnetic sensors has a lower amplitude than the amplitude of an output waveform of a single magnetic sensor alone.
(9) A torque detection device including:
   the relative rotational angular displacement detection device according to any one of (1) to (8); and
   an elastic member arranged between the pair of rotatable members, the elastic member configured to constantly give a biasing force in a relative rotation direction to the pair of rotatable members, wherein
   the pair of rotatable members are provided with a relative rotation restriction part,
   the relative rotation restriction part is configured to prevent rotation of the rotatable members relative to each other after either one of the pair of rotatable members is rotated relative to the other of the rotatable members through a predetermined rotational angle against the biasing force of the elastic member.
(10) A torque control device including:
   the relative rotational angular displacement detection device according to any one of (1) to (8);
   a rotary driving member connected to either one of the pair of rotatable members, the rotary driving member configured such that a user gives a rotational force thereto;
   a power source configured to give a rotational force to the other of the rotatable members; and
   a control unit configured to control the rotational force given by the power source depending on an output of the magnetic detection unit in a state where the one of the rotatable members is relatively rotated through a predetermined rotational angle.
(11) A power assist wheelchair including the torque control device according to (10).
(12) A power assist straddle-type vehicle including the torque control device according to (10).
(13) A power steering device including the torque control device according to (10).

### Advantageous Effects of Invention

The present invention can provide a relative rotational angular displacement detection device having a simple structure that can be manufactured and assembled easily and able to detect a relative rotational angular displacement with a high degree of accuracy.

### Brief Description of Drawings

[FIG. 1] An explanatory diagram showing a schematic structure of a relative rotational angular displacement detection device according to a first embodiment of the present invention.
[FIG. 2] An enlarged cross-sectional view of the area "A" enclosed by the dash line in FIG. 1.
[FIG. 3] A diagram showing a schematic structure of the device as seen in the axial direction of the axis of rotation of the device.
[FIG. 4A] An explanatory diagram showing a positional relation among magnetic poles of a permanent magnet, protruding portions of a magnetic flux guiding ring, and magnetic detection units.
[FIG. 4B] A graph showing an output waveform of a first magnetic sensor, an output waveform of a second magnetic sensor, and a combined output waveform obtained by combining the above-mentioned output waveforms in a case where, in the first embodiment, the magnetic detection units are rotated in a circumferential direction along a ring body of the magnetic flux guiding ring while the positional relation among the magnetic poles of the permanent magnet, the protruding portions of the magnetic flux guiding ring, and the magnetic detection units is maintained in the state shown in FIG. 3.
[FIG. 5A] An explanatory diagram showing a positional relation among magnetic poles of a permanent magnet, protruding portions of a magnetic flux guiding ring, and magnetic detection units according to a second embodiment of the present invention.

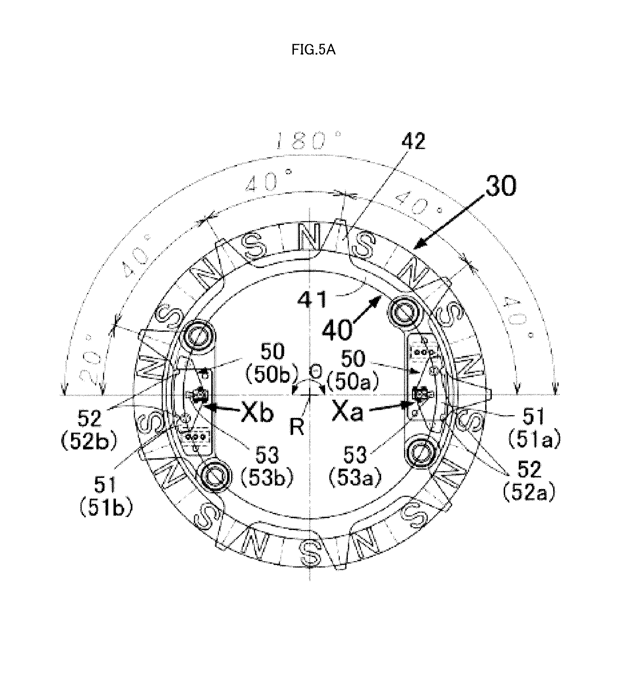

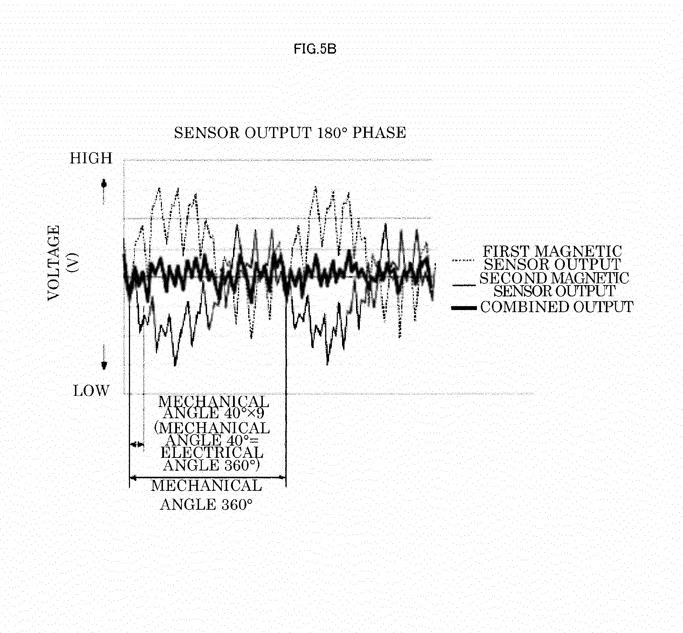

[FIG. 5B] A graph showing an output waveform of a first magnetic sensor, an output waveform of a second magnetic sensor, and a combined output waveform obtained by combining the above-mentioned output waveforms in a case where, in the second embodiment shown in FIG. 5A, the magnetic detection units are rotated in a circumferential direction along a ring body of the magnetic flux guiding ring while the positional relation among the magnetic poles of the permanent magnet, the protruding portions of the magnetic flux guiding ring, and the magnetic detection units is maintained in an initial state.
[FIG. 6] A plan view of an intermediate yoke adopted in the first embodiment and the second embodiment.
[FIG. 7A] An explanatory diagram showing a positional relation between the magnetic poles of the permanent magnet and the protruding portions of the magnetic flux guiding ring in the initial state.
[FIG. 7B] An explanatory diagram showing a positional relation between the magnetic poles of the permanent magnet and the protruding portions of the magnetic flux guiding ring under the state where first and second rotatable members are rotated through a predetermined angle from the initial state.
[FIG. 8A] An explanatory diagram showing a state of magnetic flux distribution in the magnetic poles of the permanent magnet and the magnetic flux guiding ring in the initial state.
[FIG. 8B] An explanatory diagram showing a state of magnetic flux distribution in the permanent magnet, the magnetic flux guiding ring, the intermediate yoke, the magnetic sensor, and a back yoke in the initial state.
[FIG. 8C] An explanatory diagram showing a state of magnetic flux distribution in the permanent magnet, the magnetic flux guiding ring, the intermediate yoke, the magnetic sensor, the back yoke, and the vicinity thereof in the initial state.
[FIG. 9A] An explanatory diagram showing a state of magnetic flux distribution in the magnetic poles of the permanent magnet and the magnetic flux guiding ring under the state where the first and second rotatable members are rotated through a predetermined angle from the initial state.
[FIG. 9B] An explanatory diagram showing a state of magnetic flux distribution in the permanent magnet, the magnetic flux guiding ring, the intermediate yoke, the magnetic sensor, and the back yoke under the state where the first and second rotatable members are rotated through a predetermined angle from the initial state.
[FIG. 9C] An explanatory diagram showing a state of magnetic flux distribution in the permanent magnet, the magnetic flux guiding ring, the intermediate yoke, the magnetic sensor, the back yoke, and the vicinity thereof under the state where the first and second rotatable members are rotated through a predetermined angle from the initial state.
[FIG. 10] An explanatory diagram showing a power assist wheelchair to which a torque control device including the relative rotational angular displacement detection device according to the present invention is applied.
[FIG. 11] An explanatory diagram showing a power assist bicycle to which a torque control device including the relative rotational angular displacement detection device according to the present invention is applied.
[FIG. 12] A schematic explanatory diagram showing an application of the relative rotational angular displacement detection device according to the present invention to a power assist system of a power steering device of an automobile.

### Description of Embodiments

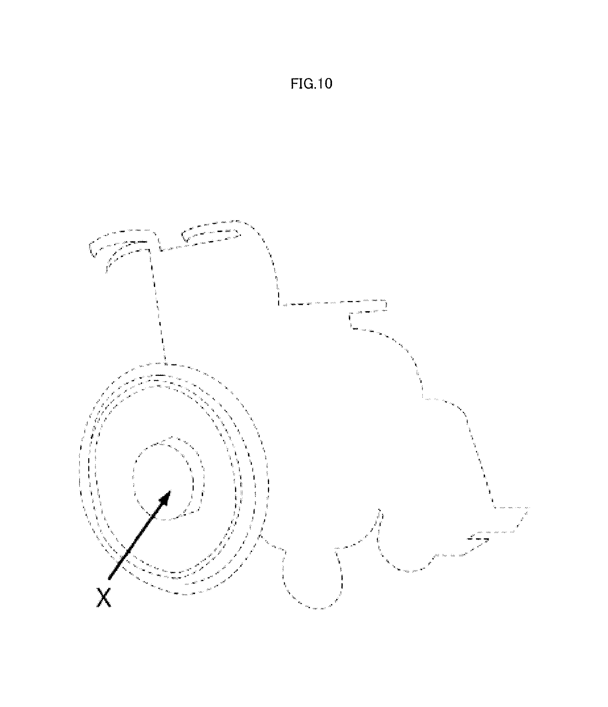

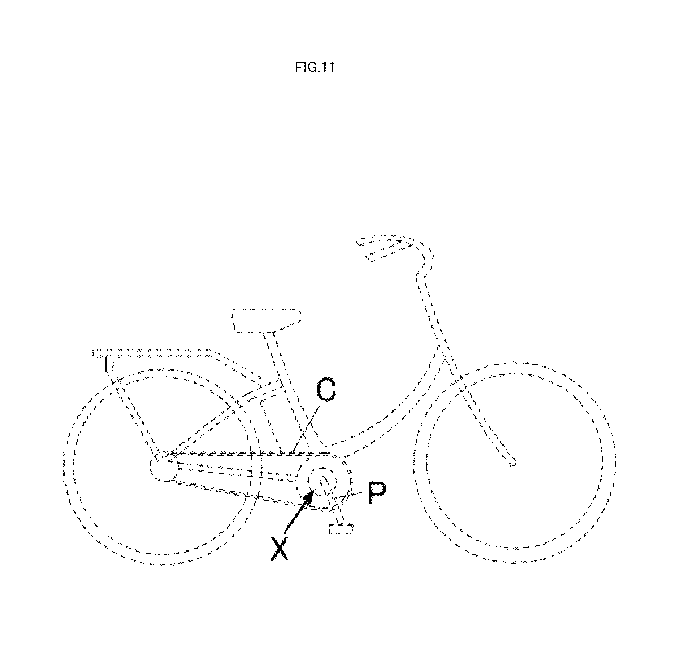

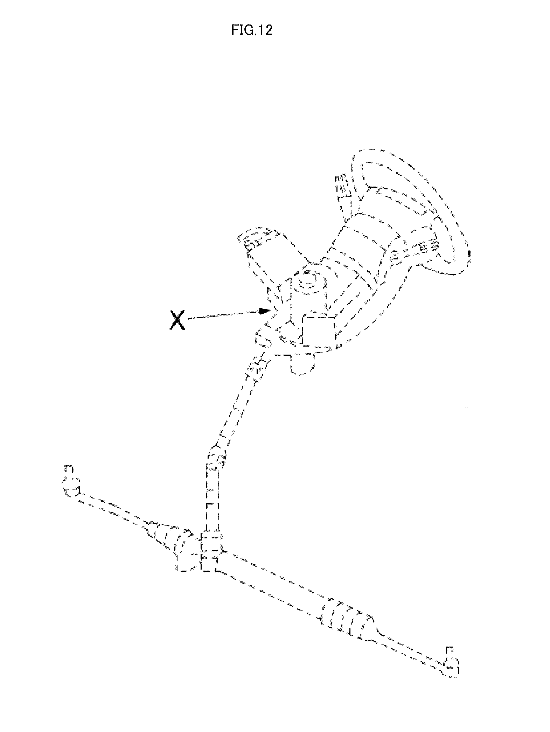

In the following, a relative rotational angular displacement detection device X according to the present invention will be described based on an exemplary embodiment in which the relative rotational angular displacement detection device X is applied to a power assist system for a power assist wheelchair (see FIG. 10). It should be noted that applications of a relative rotational angular displacement detection device according to the present invention, a torque detection device including the relative rotational angular displacement detection device, and a torque control device including the relative rotational angular displacement detection device are not limited to a power assist system for a power assist wheelchair. The relative rotational angular displacement detection device according to the present invention detects a relative rotational angular displacement of a pair of rotatable members that are arranged with their axes of rotation coaxial with each other. The relative rotational angular displacement detection device according to the present invention is adoptable for a variety of devices and mechanisms configured to detect a relative rotational angular displacement of a pair of rotatable members that are rotatable relative to each other. The present invention is also preferably adoptable for, for example, a power assist system of a power assist bicycle (see FIG. 11), a power steering device of an automobile (see FIG. 12), and the like.

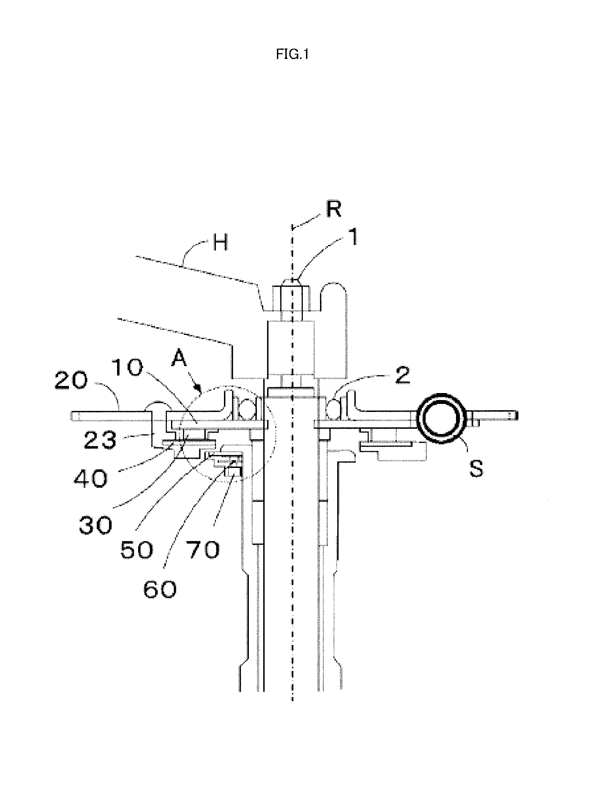

Referring to FIG. 1, in the relative rotational angular displacement detection device of this embodiment, a hand-rim coupling member H is attached to one end portion of a shaft part 1. A lever member 10 serving as a first rotatable member and a gear 20 serving as a second rotatable member, which are arranged coaxially with the shaft part 1, are provided to the one end portion of the shaft part 1. The shaft part 1 has an axis R of rotation. The axis R of rotation also serves as axes of rotation of the pair of rotatable members (the lever member 10 and the gear 20). As shown in FIG. 1, the lever member 10 and the gear 20 are arranged close to each other in an adjacent manner so as to be relatively rotatable in a circumferential direction of the axis R of rotation. The circumferential direction of the axis R of rotation may represent the rotation direction of the lever member 10 and the gear 20. The circumferential direction of the axis R of rotation may be identical to the rotation direction of the lever member 10 and the gear 20.

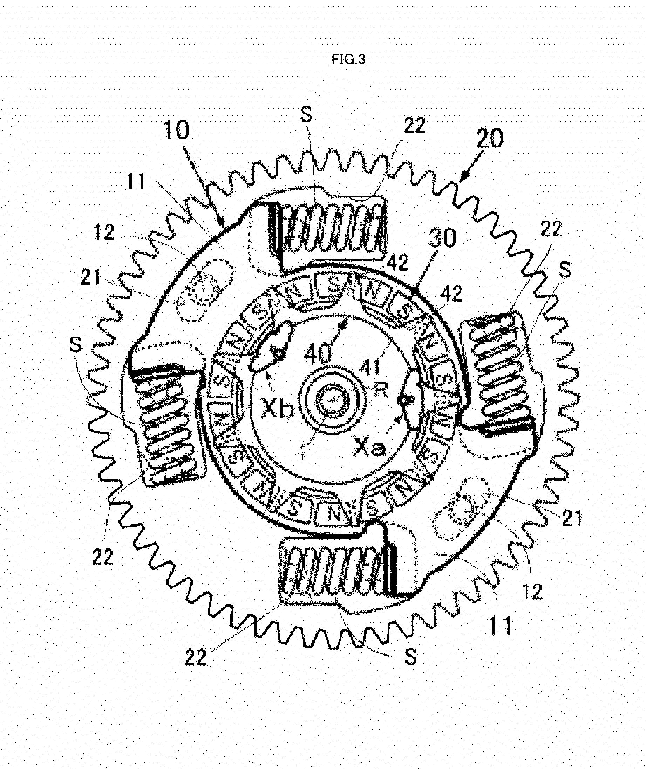

As shown in FIG. 3, the lever member 10 serving as the first rotatable member is provided integrally with two engaging portions 11 arranged at a 180-degrees phase difference and each extending radially outward of the shaft part 1. The lever member 10 is configured to rotate together with the shaft part 1 along with rotation of the hand-rim coupling member H. On the other hand, as shown in FIG. 1, the gear 20 serving as the second rotatable member is arranged coaxially with the shaft part 1 with interposition of a bearing 2 therebetween such that the gear 20 is rotatable relative to the lever member 10 serving as the first rotatable member.

As shown in FIG. 3, each engaging portion 11 of the lever member 10 is provided with a projecting portion 12 that protrudes axially outward, i.e., toward the gear 20. Each projecting portion 12 is fitted in an arc-shaped slit 21 formed in the gear 20, the slit 21 extending in the circumferential direction. Along with rotational movement of the lever member 10, the projecting portion 12 slidably moves within a range of the circumferential length of the slit 21.

In the gear 20, spring mounting holes 22 each for mounting a coil spring S serving as an elastic member are formed at four positions with respect to the circumferential direction. In each spring mounting hole 22, a coil spring S is mounted. Each engaging portion 11 of the lever member 10 is arranged between a pair of coil springs S neighboring each other with respect to the circumferential direction, and engaged with end portions of the pair of coil springs S. The pair of coil springs S bias the corresponding engaging portion 11 in the clockwise and counterclockwise directions, respectively.

Therefore, in a state where no external force is applied, the lever member 10 remains stationary at a position where biasing forces of the pair of coil springs S are balanced. Thus, the lever member 10 is able to rotate in either of the clockwise and counterclockwise directions upon application of a force in the circumferential direction.

In a case where, under this condition, no external force (rotational force) is applied, the projecting portion 12 of each engaging portion 11 of the lever member 10 is positioned between one longitudinal end and the other longitudinal end of the corresponding slit 21 formed in the gear 20, as shown in FIG. 3. When, under this condition, a clockwise or counterclockwise rotational force is applied to the hand-rim coupling member H, the shaft part 1 having the coupling member H fixed thereto rotates. Along with the rotation, a rotational force is applied to the lever member 10 fixed to the shaft part 1, resulting in clockwise or counterclockwise rotation of the lever member 10.

Such rotation of the lever member 10 causes the engaging portions 11 provided thereto to rotate relative to the gear 20 against the biasing force of the spring S that is located forward with respect to the rotation direction. At this time, the projecting portion 12 of the engaging portion 11 of the lever member 10 moves in the circumferential direction (the clockwise or counterclockwise direction) through the slit 21 formed in the gear 20. Upon reaching a circumferential end portion of the slit 21, the projecting portion 12 of the engaging portion 11 of the lever member 10 is engaged with the end portion. Thereafter, the gear 20 rotates together with the lever member 10. Before the projecting portion 12 reaches the end portion of the slit 21, the gear 20 already rotates due to release of the biasing force of the spring S.

In this embodiment, as described above, the lever member 10 serving as the first rotatable member and the gear 20 serving as the second rotatable member are movable relative to each other within a predetermined range with respect to the circumferential direction of the shaft part 1, i.e., within a range of the circumferential length of the slit 21 formed in the gear 20. The range of the circumferential length is less than the range corresponding to one rotation. The relative rotational angular displacement detection device X detects a relative rotational angular displacement of the two rotatable members within this limited range of relative rotation in the circumferential direction, and thus detects a relative rotational torque of the two rotatable members. An electric motor (not shown) is controlled in such a manner that a combination of a rotational force given from the outside and a force of the electric motor that is outputted in accordance with the rotational force is used to control a rotational force of the gear 20.

For the detection of the relative rotational angular displacement of the lever member 10 serving as the first rotatable member and the gear 20 serving as the second rotatable member, the relative rotational angular displacement detection device X of this embodiment includes a permanent magnet 30, a magnetic flux guiding ring 40 for guiding magnetic fluxes, and two magnetic sensing members (magnetic detection units) Xa and Xb, as shown in FIG. 3. Each of the magnetic sensing members Xa and Xb includes an intermediate yoke 50, a magnetic sensor 60, and a back yoke 70.

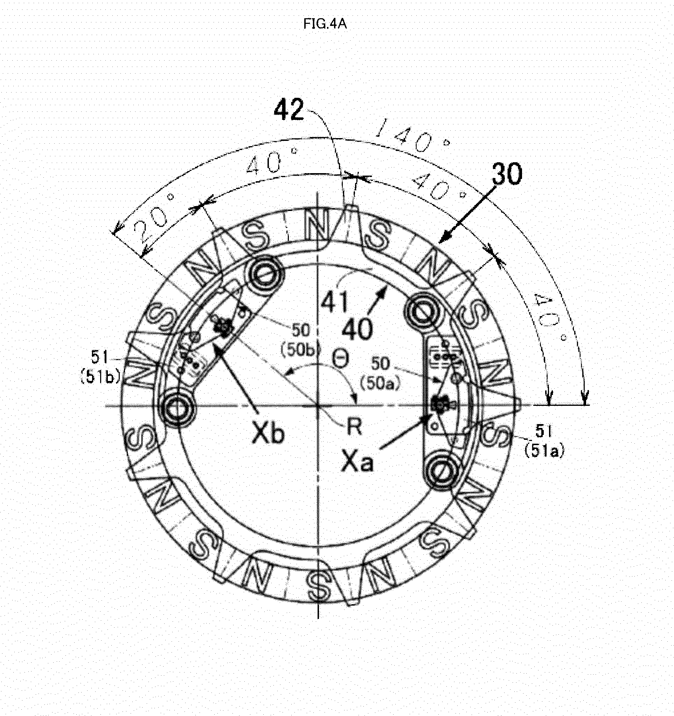

The permanent magnet 30 has an annular shape or a ring-like shape. The permanent magnet 30 is arranged with its axis coincident with the axis R of rotation, as shown in FIG. 4A. In other words, the permanent magnet 30 is arranged coaxially with the shaft part 1. The permanent magnet 30 has magnetic poles, i.e., N-poles and S-poles, that are arranged alternately in the circumferential direction of the shaft part 1. Each of the magnetic poles is magnetized in the axial direction of the shaft part 1, that is, in the direction parallel to the axis R of rotation.

In this embodiment, nine pairs of magnetic poles (a total of 18 magnetic poles, nine S-poles and nine N-poles), which are illustrated as an example of a plurality of pairs of magnetic poles, are arranged at equal intervals in the circumferential direction. The permanent magnet 30 having a ring-like shape is arranged coaxially with the lever member 10, and fixed to the lever member 10. Accordingly, the permanent magnet 30 rotates together with the lever member 10. In the present invention, the permanent magnet 30 may not necessarily be a magnet having an annular shape or ring-like shape described above. In the present invention, it may be acceptable that the permanent magnet 30 is made up of a plurality of magnets that are arranged at equal intervals in the circumferential direction. The permanent magnet 30 may be either a sintered magnet or a bond magnet, and also may be either isotropic or anisotropic. In addition, it may be a polar anisotropic magnet.

As shown in FIGS. 1 to 3, the magnetic flux guiding ring 40 is arranged coaxially with the gear 20. The magnetic flux guiding ring 40 includes an annular ring body 41 and a plurality of protruding portions 42. The annular ring body 41 does not overlap the permanent magnet 30 with respect to a radial direction of the shaft part 1. That is, the annular ring body 41 does not overlap the permanent magnet 30 when seen in the axial direction of the shaft part 1. The plurality of protruding portions 42, which protrude from the outer peripheral edge of the ring body 41 in the direction radially outward of the shaft part 1, overlap the permanent magnet 30 with respect to the radial direction. Thus, the plurality of protruding portions 42 overlap the permanent magnet 30 when seen in the axial direction of the shaft part 1.

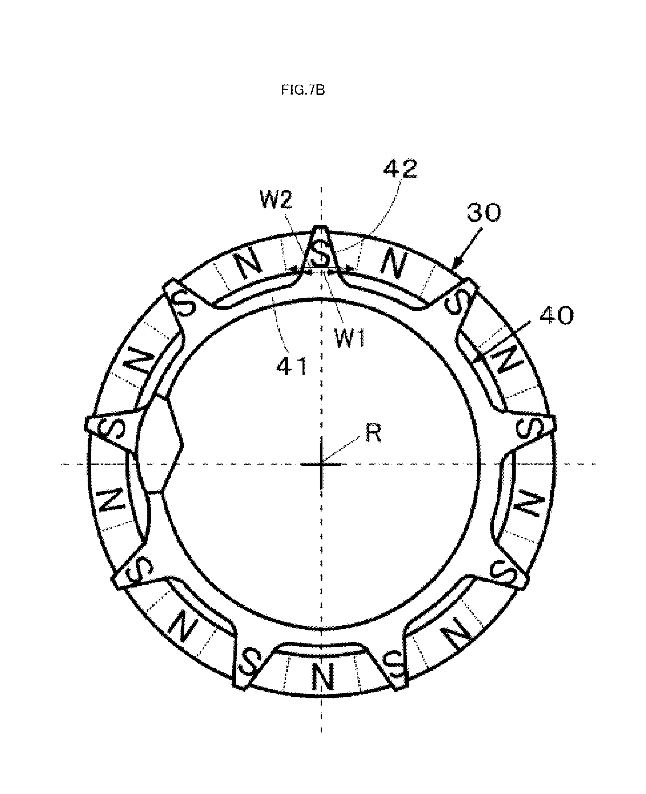

In this embodiment, the number of the plurality of protruding portions 42 is equal to the number of pairs of magnetic poles (in this embodiment, nine). In this embodiment, each of the plurality of protruding portions 42 has a circumferential width smaller than the circumferential width of each magnetic pole. More specifically, each protruding portion 42 of the magnetic flux guiding ring 40 is tapered into an almost triangular or trapezoidal shape with its width decreasing toward the radially outside. A circumferential width W1, which is the width of a portion of the protruding portion 42 overlapping the inner peripheral edge of the permanent magnet 30 when seen in the axial direction of the shaft part 1, is set narrower than a circumferential width W2, which is the width of the inner peripheral edge of each magnetic pole (see FIG. 7B). As shown in FIG. 1, the magnetic flux guiding ring 40 is secured to and integrated with the gear 20 via an attachment 23 with a space ensured between the magnetic flux guiding ring 40 and the gear 20 with respect to the axial direction. That is, the magnetic flux guiding ring 40 is configured to rotate together with the gear 20.

In this embodiment, each protruding portion 42 extends radially outward. In the present invention, however, the direction in which the protruding portions extend is not limited thereto. It may be acceptable that the protruding portions 42 extend radially inward from the inner peripheral edge of the ring body 41. In other words, a configuration is acceptable in which the ring body 41 is arranged outside of the permanent magnet 30 having an annular shape and the protruding portions 42 extend inward from the ring body 41.

In this embodiment, the magnetic flux guiding ring 40 can be easily prepared by a stamping process being performed on a steel plate or the like. In the present invention, however, the process for preparing the magnetic flux guiding ring is not limited to this example. The magnetic flux guiding ring 40 may be formed as a combination of a plurality of members. Additionally, although this embodiment illustrates a case where the ring body 41 and the protruding portions 42 of the magnetic flux guiding ring 40 are on the same plane, the present invention is not necessarily limited to this example. In another example, the magnetic flux guiding ring 40 may be configured such that the protruding portions 42 are bent at a predetermined angle relative to the ring body 41.

FIG. 3 shows an initial state. In the initial state, no external force is applied from the outside to the shaft part 1. In the initial state, each protruding portion 42 of the magnetic flux guiding ring 40 is positioned substantially in between the S-pole and N-pole of the permanent magnet 30. When, under this condition, an external force is applied to the shaft part 1, the lever member 10 rotates in either of the clockwise and counterclockwise directions in accordance with the direction of the external force. Along with this rotation, the lever member 10 rotates and displaces relative to the gear 20. At the same time, the projecting portion 12 provided to the engaging portion 11 of the lever member 10 moves through the slit 21 formed in the gear 20.

At this time, the projecting portion 12 of the lever member 10 moves through the slit 21, until the projecting portion 12 is engaged with the circumferential end portion of the slit 21 so that any further relative displacement is restricted. After the projecting portion 12 of the lever member 10 moves into engagement with the end portion of the slit 21, every protruding portion 42 of the magnetic flux guiding ring 40 is positioned such that the area over which the protruding portion 42 overlaps one magnetic pole (for example, the S-pole) of the permanent magnet 30 is larger.

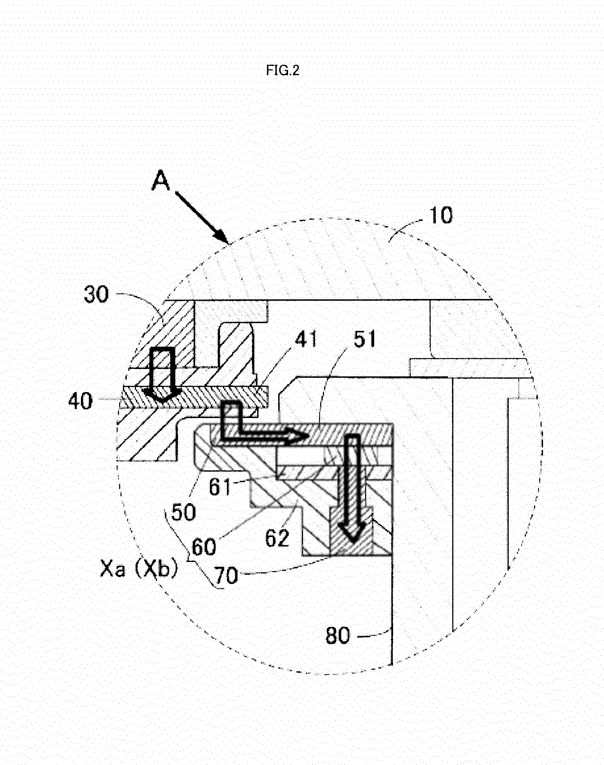

As shown in FIGS. 1 and 2, the intermediate yoke 50 is arranged so as to overlap the ring body 41 of the magnetic flux guiding ring 40 with respect to the radial direction of the axis R of rotation. In other words, the intermediate yoke 50 is arranged so as to overlap the ring body 41 of the magnetic flux guiding ring 40 when seen in the axial direction of the axis R of rotation. The intermediate yoke 50 is arranged with a gap ensured between the intermediate yoke 50 and the ring body 41 of the magnetic flux guiding ring 40. The intermediate yoke 50 faces the ring body 41 of the magnetic flux guiding ring 40 across the gap with respect to the axial direction of the axis R of rotation. The intermediate yoke 50 is made of a ferromagnetic substance such as iron. The intermediate yoke 50 is provided for the purpose of collecting magnetic fluxes of the magnetic flux guiding ring 40 magnetized by the permanent magnet 30 and averaging the amplitude of the magnetic fluxes caused by rotation of the magnetic flux guiding ring 40.

As shown in FIGS. 1 and 2, the magnetic sensor 60 overlaps the intermediate yoke 50 with respect to the radial direction of the axis R of rotation. In other words, the magnetic sensor 60 overlaps the intermediate yoke 50 when seen in the axial direction of the axis R of rotation. The magnetic sensor 60 is an element for sensing magnetic fluxes passing through the intermediate yoke 50. For example, a Hall element (Hall IC) is preferably adoptable as the magnetic sensor 60. As shown in FIG. 2, the magnetic sensor 60 is attached to a base plate 61 made of a resin, and fixed to a non-rotatable member 80 of a vehicle body via a base plate holder 62. The non-rotatable member 80 does not rotate together with the first rotatable member 10 and the second rotatable member 20.

The back yoke 70 is made of a ferromagnetic substance such as iron. The back yoke 70 is embedded in and integrated with the base plate holder 62. The back yoke 70 overlaps the magnetic sensor 60 with respect to the radial direction. In other words, the back yoke 70 overlaps the magnetic sensor 60 when seen in the axial direction of the axis R of rotation. The back yoke 70 is arranged close to the magnetic sensor 60.

In detail, the intermediate yoke 50 and the back yoke 70 are provided as an integrated structure, and they overlap each other when seen in the axial direction of the shaft part 1. The intermediate yoke 50 and the back yoke 70 constitute a magnetic flux collecting circuit that serves as a part of a magnetic flux circuit through which the magnetic fluxes of the magnetic flux guiding ring 40 magnetized by the permanent magnet 30 pass. In this embodiment, the intermediate yoke 50 and the back yoke 70 form the magnetic flux collecting circuit. However, such a configuration that the magnetic flux path through which the magnetic fluxes of the permanent magnet 30 pass constitutes a magnetic closed loop having a low magnetic resistance is not positively required.

In other words, the magnetic circuit is configured as if it terminates at the back yoke 70. Adoption of such a configuration enables the relative rotational angular displacement detection device X to detect, by means of the magnetic sensor 60, a change in the magnetic fluxes passing through the area between the intermediate yoke 50 and the back yoke 70 with achievement of a very simple device structure as a whole, as compared with a case of constituting a closed magnetic loop circuit. In the present invention, it may be likely that, for example, component parts of the vehicle other than the intermediate yoke 50 and the back yoke 70 happen to constitute a magnetic closed loop circuit.

In this embodiment, as described above, the intermediate yoke 50, the magnetic sensor 60, and the back yoke 70 are fixed to the non-rotatable member 80 of the vehicle body independently of the lever member 10 and the gear 20 serving as the first and second rotatable members that are detection objects whose relative rotational movement is to be detected The lever member 10 and the gear 20 are attached to the non-rotatable member 80. This achieves a more simple mounting structure. This also provides an advantageous effect of lower risk of occurrence of breakdown, because the magnetic sensor 60 is not rotated.

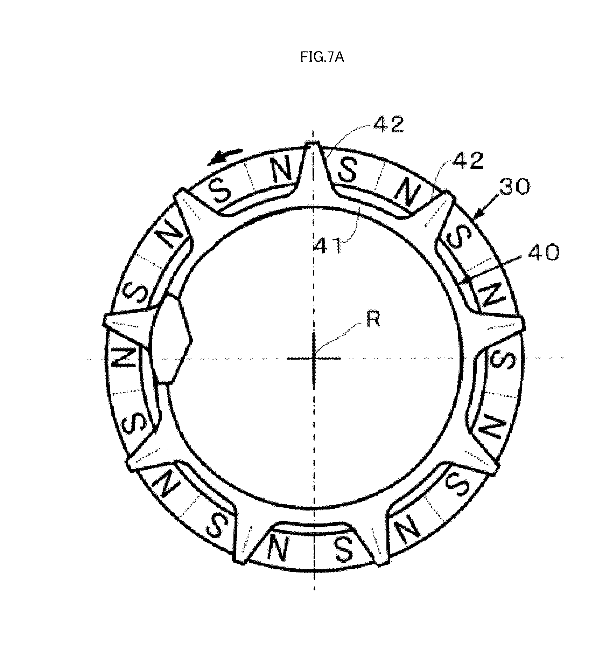

Next, the basic principle of the operation of the relative rotational angular displacement detection device X will be described with reference to FIGS. 7A to 9C. In these figures, for convenience of the description, a device including a single magnetic sensing member (magnetic detection unit) is illustrated. FIG. 7A shows an initial state in which the lever member 10 serving as the first rotatable member and the gear 20 serving as the second rotatable member are not rotated relative to each other. In the initial state, each protruding portion 42 of the magnetic flux guiding ring 40 is positioned in between the magnetic poles of the permanent magnet 30, i.e., between the N-pole and S-pole. In the initial state, each protruding portion 42 constitutes a magnetic circuit between adjacent N-pole and S-pole.

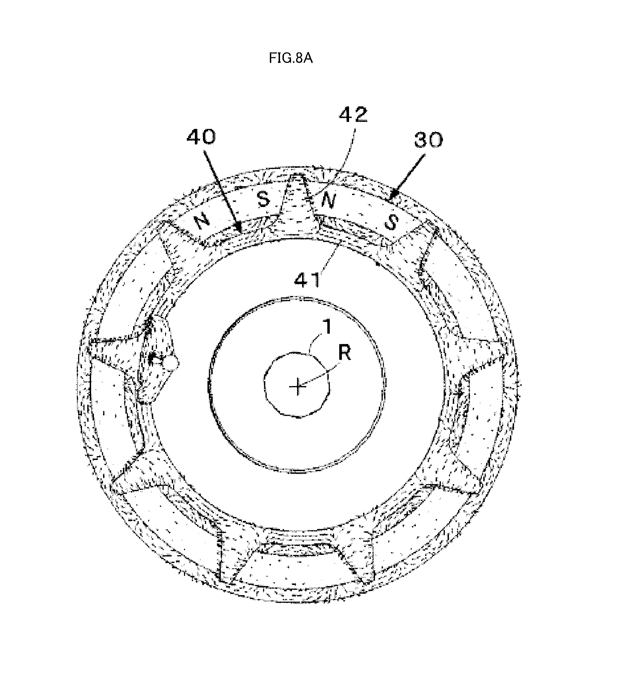

The ring body 41 is arranged such that each protruding portion 42 is positioned in between the N-pole and S-pole when seen in the axial direction of the shaft part 1. The area over which the protruding portion 42 overlaps the S-pole is equal to the area over which the protruding portion 42 overlaps the N-pole. Therefore, the state is maintained in which the ring body 41 is weakly magnetized such that N-poles and S-poles alternately appear in the circumferential direction of the ring body 41 in accordance with the N-poles and S-poles of the magnet. The ring body 41 is maintained in a substantially neutral state in a magnetical sense (see FIG. 8A).

In this embodiment, the gap between the outer peripheral edge of the ring body 41 and the inner peripheral edge of the permanent magnet 30 is narrow. As described above, the ring body 41 is weakly magnetized such that N-poles and S-poles alternately appear in the circumferential direction of the ring body 41 in accordance with the N-poles and S-poles of the magnet. Widening the gap between the outer peripheral edge of the ring body 41 and the inner peripheral edge of the permanent magnet 30 further weakens the magnetization. As a result, the accuracy of detection can be improved.

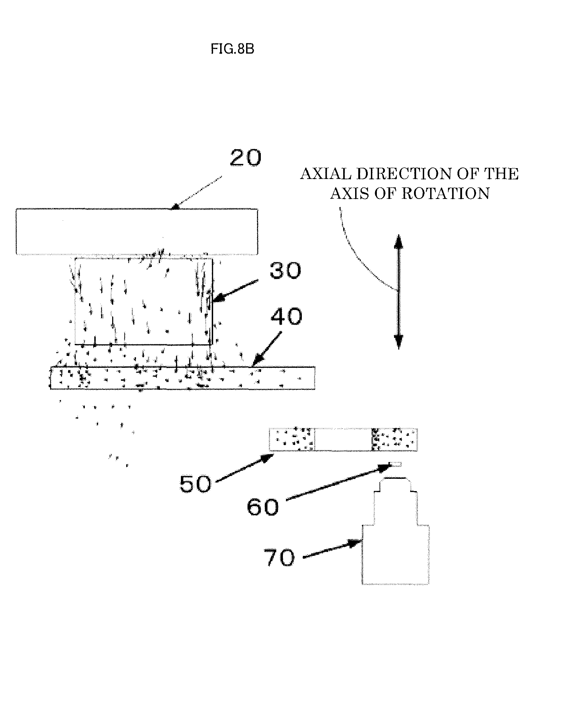

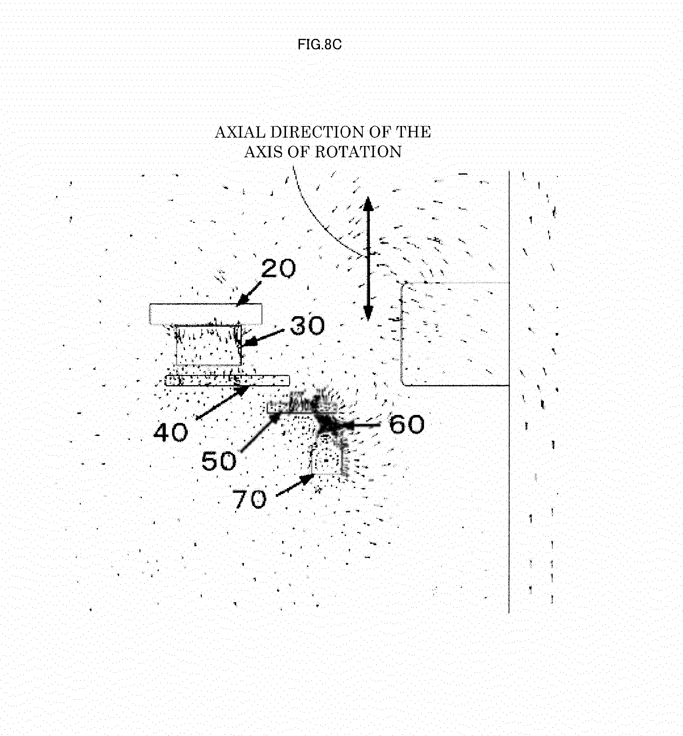

Accordingly, in the initial state, magnetic fluxes flow very weakly from the ring body 41 of the magnetic flux guiding ring 40 to the intermediate yoke 50, or almost no magnetic flux flows (see FIGS. 8B and 8C). In the initial state, magnetic fluxes of the ring body 41 weakly magnetized in the circumferential direction are collected by the intermediate yoke 50 and the back yoke 70 that are arranged adjacent to the ring body 41, and the magnetic fluxes concentratedly pass through the magnetic sensor 60 that is arranged between the intermediate yoke 50 and the back yoke 70 (see FIG. 8C). This can ensure that the magnetic sensor 60 senses the magnetic fluxes of the ring body 41.

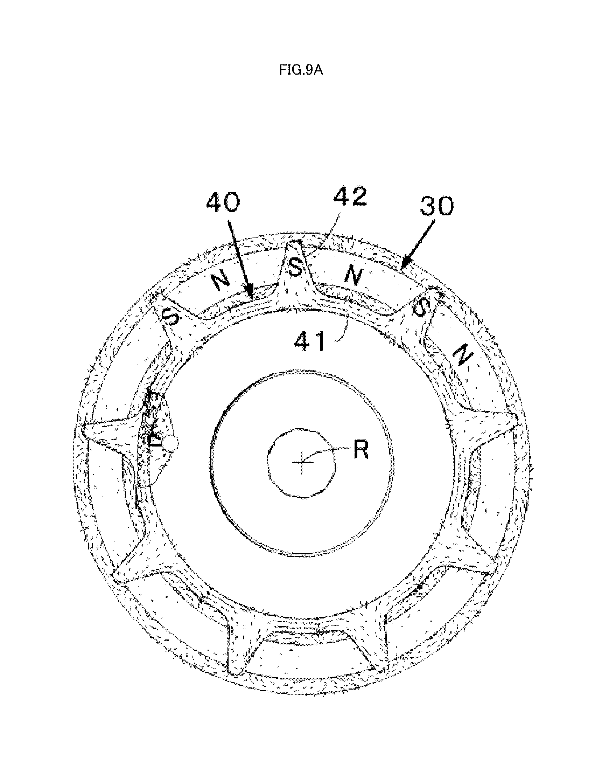

When, under this condition, the lever member 10 is rotated through a predetermined angle (in the illustrated embodiment, 10 degrees) in the circumferential direction, each protruding portion 42 of the magnetic flux guiding ring 40 overlaps either one of the magnetic poles (in the embodiment, the S-pole) of the permanent magnet 30 when seen in the axial direction of the axis R of rotation, as shown in FIG. 7B. Each protruding portion 42 is strongly magnetized by the magnetic pole (in the embodiment, the S-pole) of the permanent magnet 30 that overlaps the protruding portion 42 (see FIG. 9A).

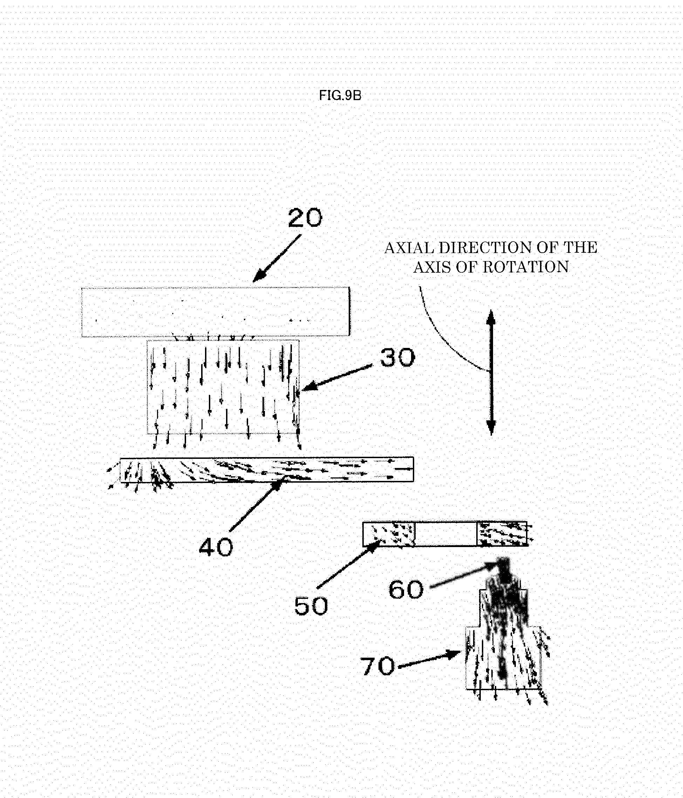

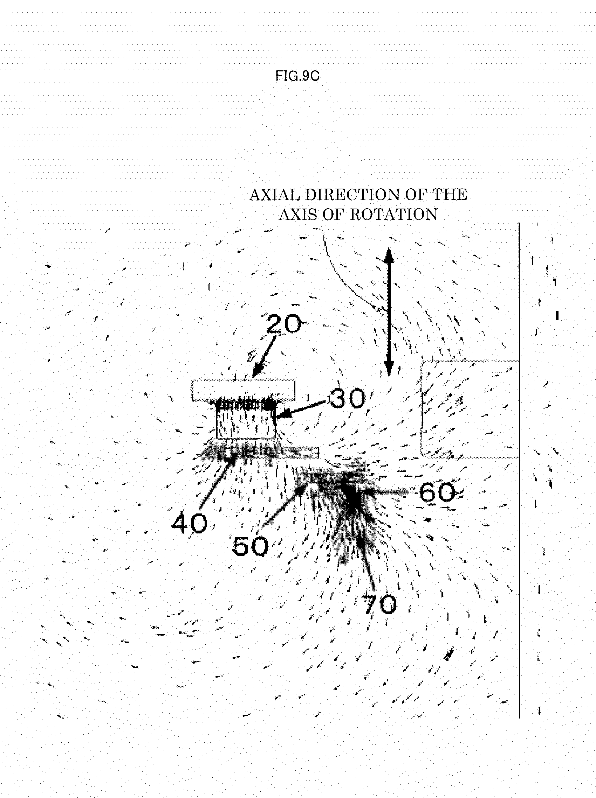

Consequently, the ring body 41 is magnetized throughout the circumference by the magnetic pole (in the embodiment, the S-pole) of the permanent magnet 30 that overlaps each protruding portion 42. Magnetic fluxes of the magnetic flux guiding ring 40 magnetized in this manner are collected by the intermediate yoke 50 and the back yoke 70 that are arranged adjacent to the magnetic flux guiding ring 40, and the magnetic fluxes concentratedly pass through the magnetic sensor 60 that is arranged between the yokes (see FIGS. 9B and 9C). This can ensure the sensing of the magnetic fluxes of the ring body 41 magnetized into one of the magnetic poles (in the embodiment, the S-pole) along the circumferential direction.

In the relative rotational angular displacement detection device X of this embodiment, a magnetic circuit serving as a magnetic flux collecting circuit is formed only by the intermediate yoke 50 and the back yoke 70. Thus, the relative rotational angular displacement detection device X is able to detect a displacement of magnetic fluxes passing through the magnetic flux collecting circuit by means of the magnetic sensor 60, without positively providing a magnetic closed loop circuit. In this device, a magnetic closed loop circuit for the permanent magnet 30 is formed so as to pass through the magnetic flux guiding ring 40, the intermediate yoke 50, and the back yoke 70 as shown in FIGS. 8C and 9C, but it is not always necessary to positively provide a magnetic closed loop circuit by using members other than the aforementioned members.

The phrase "it is not always necessary to positively provide a magnetic closed loop circuit" means that it suffices that a magnetic flux collecting circuit including at least the intermediate yoke 50 and the back yoke 70 is provided. In other words, in the present invention, it may be likely that other component parts of the vehicle body, such as the shaft part 1 and parts located therearound, cooperate with the magnetic flux guiding ring 40, the intermediate yoke 50, and the back yoke 70, to happen to constitute a magnetic closed loop circuit. Thus, the present invention does not always need positive providing of a magnetic closed loop circuit.

For example, under the state where each protruding portion 42 of the magnetic flux guiding ring 40 is positioned between the S-pole and N-pole of the permanent magnet 30, the permanent magnet 30 rotates relative to the magnetic flux guiding ring 40 in the counterclockwise direction. Along with the relative rotation, the state gradually shifts from the so-called magnetically neutral or almost neutral state in which the ring body 41 of the magnetic flux guiding ring 40 is weakly magnetized throughout the circumference of the ring body 41 into the state in which the ring body 41 is magnetized into the S-pole throughout the circumference.

The magnetic sensor 60 senses a change in magnetic fluxes depending on such a relative rotational angular displacement of the magnetic flux guiding ring 40 relative to the gear 20. The relative rotational angular displacement is continuously detected in accordance with the status of the change in the magnetic fluxes thus sensed. In this embodiment, the spring S is mounted, and therefore the relative rotational angular displacement of the lever member 10 and the gear 20 can be detected, which leads to detection of a relative rotational torque displacement. Accordingly, the relative rotational angular displacement detection device X is able to assist a rotational force of the shaft part 1 by controlling motorized drive means (not shown) by means of control means (not shown) based on the displacement.

As described above, the magnetic sensor 60 detects the state of magnetization of the ring body 41 of the magnetic flux guiding ring 40 magnetized by the magnetic poles of the permanent magnet 30, which is involved in the relative rotational angular displacement of the rotatable members 10 and 20. As a result, the relative rotational angular displacement detection device X is able to detect a relative rotational angular displacement of the pair of rotatable members. As shown in FIG. 3, the relative rotational angular displacement detection device X according to the embodiment of the present invention is provided with two magnetic sensing members Xa and Xb each including the intermediate yoke 50, the magnetic sensor 60, and the back yoke 70. This enables the relative rotational angular displacement detection device X to detect a relative rotational angular displacement of the pair of rotatable members with a high degree of accuracy.

The relative rotational angular displacement detection device X is provided with the two magnetic sensing members Xa and Xb, for the following reasons. In the initial state shown in FIG. 3, each protruding portion 42 of the magnetic flux guiding ring 40 is positioned between the S-pole and N-pole of the permanent magnet 30. In the initial state, as mentioned above, the ring body 41 of the magnetic flux guiding ring 40 is weakly magnetized alternately in the circumferential direction in accordance with the N-poles and S-poles of the magnet. In the initial state, the ring body 41 of the magnetic flux guiding ring 40 is maintained in a substantially neutral state in a magnetical sense. That is, the ring body 41 of the magnetic flux guiding ring 40 is not completely neutral in a magnetical sense, but is slightly magnetized by the influence of the magnetic poles of the permanent magnet 30 such that the polarity of the ring body 41 alternately changes in the circumferential direction. Designing is made so as to allow the permanent magnet 30 and the magnetic flux guiding ring 40 to be arranged coaxially with each other. Actually, however, their axes of rotation may be slightly shifted from each other instead of being completely coaxial with each other. In such a case, the gap between the inner peripheral edge of the permanent magnet 30 and the outer peripheral edge of the ring body 41 of the magnetic flux guiding ring 40 slightly varies in the circumferential direction. In still another case, moreover, the state of magnetization of the permanent magnet 30 may not always be as designed.

In such cases, when the magnetic sensing member is moved in the circumferential direction relative to the ring body 41 of the magnetic flux guiding ring 40 under the state (for example, in the initial state) where the relative positions between the pair of rotatable members are fixed, the output of the magnetic sensor 60 may fluctuate. Since the pair of rotatable members are not rotated relative to each other, the fluctuation in the output of the magnetic sensor 60 is not preferable.

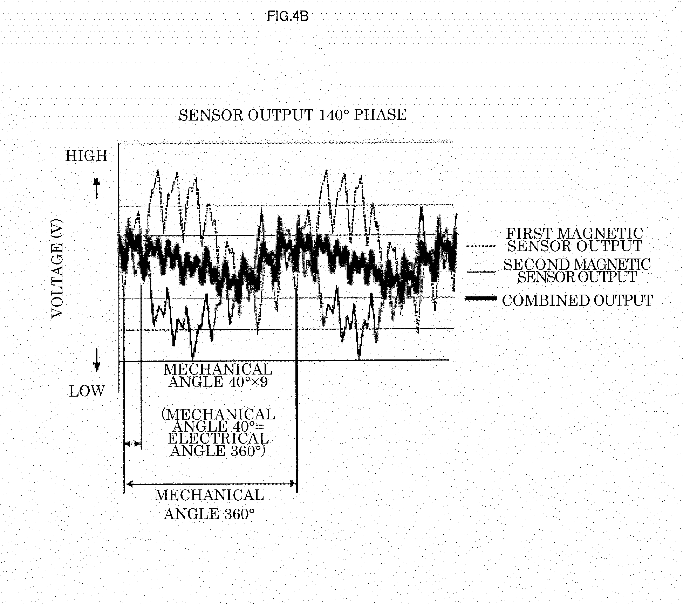

The present invention solves such a problem of the fluctuation in the output of the magnetic sensor 60 by means of a mechanical structure, instead of suppressing the fluctuation by means of software or the like. FIG. 4B shows output waveforms of the magnetic sensors. As shown in FIG. 4B, the output of the magnetic sensor largely and periodically fluctuates while containing minor fluctuations. The minor fluctuations are caused by the weak magnetization of the ring body 41 of the magnetic flux guiding ring 40 with the polarity alternately changing in the circumferential direction. On the other hand, the cause of the large periodical variation would be considered as mechanical errors such as misalignment between the axes of rotation of the permanent magnet 30 and the ring body 41 of the magnetic flux guiding ring 40.

Therefore, the device according to the first embodiment is provided with the two magnetic sensing members Xa and Xb each including the intermediate yoke 50, the magnetic sensor 60, and the back yoke 70, as shown in FIG. 3. The two magnetic sensing members Xa and Xb are arranged so as to satisfy such a positional relation that an output waveform obtained by combining the outputs of the magnetic sensors 60 of the two magnetic sensing members Xa and Xb has a lower amplitude than the amplitude of an output waveform of each magnetic sensor 60 alone.

More specifically, in the first embodiment, the two magnetic sensing members Xa and Xb are arranged at such positions that the output of one of the magnetic sensors 60 and the output of the other of the magnetic sensors 60 are opposite in phase, as shown in FIG. 4A. In more detail, the two magnetic sensing members Xa and Xb are arranged at positions that are phase-shifted by 140 degrees in mechanical angle. One cycle (360°) in electrical angle corresponds to, in mechanical angle, the entire circumferential width of one pair of magnetic poles. In the case illustrated in this embodiment, one cycle in electrical angle corresponds to 40 degrees in mechanical angle. Therefore, the two magnetic sensing members Xa and Xb are arranged at positions that satisfy a relation of [40 degrees (the value in mechanical angle corresponding to one cycle in electrical angle) × 3 + 20 degrees ((the value in mechanical angle corresponding to one cycle in electrical angle)/2)]. It suffices that the two magnetic sensing members Xa and Xb are arranged at positions that satisfy a relation of [(the value in mechanical angle corresponding to one cycle in electrical angle) x N + (the value in mechanical angle corresponding to one cycle in electrical angle)/2, where N represents a positive integer]. Preferably, the central angle formed between the two magnetic sensing members Xa and Xb (a first facing portion 51a and a second facing portion 51b) is 90° or more in mechanical angle and 270° or less in mechanical angle, as illustrated in this embodiment. That is, it is preferable that the central angle is not an included angle. This enables detection of a relative rotational angular displacement with a high degree of accuracy.

In the exemplary embodiment in which the two magnetic sensing members Xa and Xb are arranged at the positions shown in FIG. 4A, a combined output waveform obtained by combining the outputs of the two magnetic sensors has a lower amplitude than the amplitude of the output waveform of each magnetic sensor alone, as shown in FIG. 4B.

FIG. 5A shows a second embodiment according to the present invention. In this embodiment, the two magnetic sensing members Xa and Xb are arranged at positions that are phase-shifted by 180 degrees. In this case as well, the relation of [(the value in mechanical angle corresponding to one cycle in electrical angle) × N + (the value in mechanical angle corresponding to one cycle in electrical angle)/2] is satisfied. The combined output waveform obtained by combining the outputs of the two magnetic sensors has a lower amplitude than the amplitude of the output waveform of each magnetic sensor alone (see FIG. 5B). The other parts of the configuration are identical to those of the first embodiment, and therefore detailed descriptions thereof will not be given.

Here, it may be acceptable that the magnetic detection unit X includes not only the first facing portion 51a and the second facing portion 51b but also M pieces of facing portions. In such a case, the facing portions are arranged such that the angle formed between adjacent ones of the facing portions with respect to the circumferential direction of the axis R of rotation satisfies a relational expression of [(the value in mechanical angle corresponding to one cycle in electrical angle of the permanent magnet) × N + (the value in mechanical angle corresponding to one cycle in electrical angle of the permanent magnet)/(2+M), where N and M represent positive integers]. This configuration is able to exert the same effects as the above-described effects.

The two magnetic sensing members Xa and Xb are provided in the first and second embodiments, but the present invention is not necessarily limited to these embodiments. For example, no limitation is put on the number of magnetic sensing members and the positions where the magnetic sensing members are arranged, as long as a plurality of magnetic sensors are arranged so as to satisfy such a positional relation that, when the plurality of magnetic sensing members are rotationally moved in the circumferential direction relative to the ring body of the magnetic flux guiding ring under the state where each protruding portion of the magnetic flux guiding ring is positioned between the S-pole and N-pole of the permanent magnet, an output waveform obtained by combining outputs of the plurality of magnetic sensors has a lower amplitude than the amplitude of an output waveform of each magnetic sensor alone.

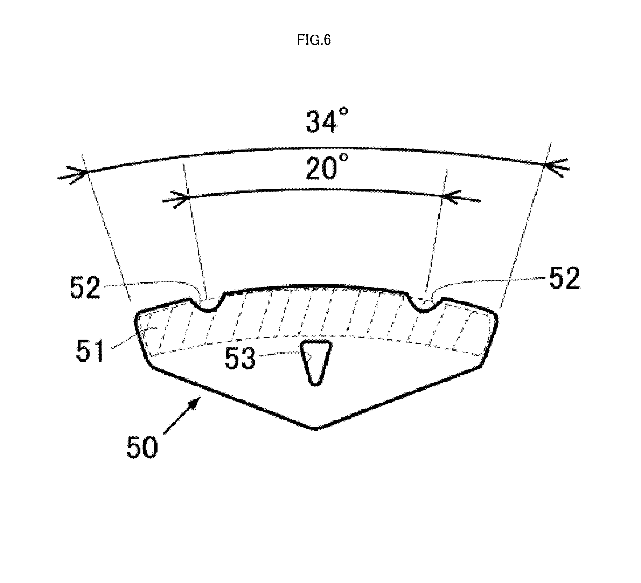

FIG. 6 is a plan view of the intermediate yoke 50 adopted in the embodiments. The intermediate yoke 50 includes a facing portion 51 that overlaps the ring body 41 of the magnetic flux guiding ring 40 when seen in the axial direction of the shaft part 1. The intermediate yoke 50 has a substantially fan-like shape when seen in the axial direction of the shaft part 1.

The intermediate yoke 50 includes a pair of cutout portions 52. The pair of cutout portions 52 are formed in the outer peripheral edge of an outer peripheral edge portion of the intermediate yoke 50, and apart from each other with respect to the circumferential direction. The positions of the pair of cutout portions 52 correspond to half (20 degrees) of the value in mechanical angle (in the embodiment, 40 degrees) corresponding to one cycle in electrical angle of the permanent magnet 30. The cutout portion 52 is an illustrative example of a recessed portion which is formed by cutting out the intermediate yoke 50 in the radial direction of the axis R of rotation. That is, the facing portion 51 may include a recessed portion recessed toward the inside with respect to the radial direction of the axis R of rotation. The interval between two recessed portions with respect to the circumferential direction is, for example, substantially half of the value in mechanical angle corresponding to one cycle in electrical angle. The recessed portions (for example, the cutout portions) formed in the first facing portion correspond to a first magnetic flux collecting portion which collects magnetic fluxes toward a first magnetic sensor. The recessed portions formed in the second facing portion correspond to a second magnetic flux collecting portion which collects magnetic fluxes toward a second magnetic sensor. The magnetic sensor is positioned substantially between the pair of magnetic flux collecting portions.

The intermediate yoke 50 also includes an opening portion 53. The opening portion 53 is provided at a position that does not overlap the ring body 41 of the magnetic flux guiding ring 40 when seen in the axial direction of the shaft part 1. The opening portion 53 is provided at a position that does not overlap the facing portion 51 when seen in the axial direction of the shaft part 1. The opening portion 53 is provided at a substantially intermediate position with respect to the circumferential direction of the intermediate yoke 50. As shown in FIG. 6, the opening portion 53 is substantially in the shape of an inverted triangle. The opening portion 53 is an illustrative example of an averaging part. The averaging part (opening portion 53) is positioned between the permanent magnet 30 and the magnetic sensor 60 with respect to the radial direction. The averaging part (opening portion 53) is positioned between the facing portion 51 and the magnetic sensor 60 with respect to the radial direction. The averaging part (opening portion 53) and the magnetic sensor 60 are located on a straight line extending in the radial direction. The averaging part (opening portion 53) is configured to average the amplitude of magnetic fluxes flowing from the facing portion 51 to the magnetic sensor 60.

In the facing portion 51 (51a, 51b), magnetic fluxes coming from the ring body 41 are, at the cutout portions 52 (magnetic flux collecting portion), collected toward the magnetic sensor 60. Then, the amplitude of the magnetic fluxes flowing from the facing portion 51 toward the magnetic sensor 60 is averaged by the opening portion 53 (averaging part). The magnetic fluxes having the averaged amplitude are detected by the magnetic sensor 60.

Specific dimensions of the portions of the intermediate yoke 50 are, for example, the ones shown in FIG. 6. The intermediate yoke 50 shown in FIG. 6 is able to reduce the influence given from the configuration in which the ring body 41 of the magnetic flux guiding ring 40 is magnetized with the magnetic pole alternately changing in the circumferential direction. In other words, it is able to reduce the minor fluctuations contained in the output waveform of each magnetic sensor 60 graphed in FIGS. 4B and 5B. Accordingly, the configuration including two or more magnetic sensing members as illustrated above and the intermediate yoke 50 having the shape as shown in FIG. 6 is able to reduce fluctuations in the output waveform of the magnetic sensor that do not contribute to detection of a rotational angular displacement. As a result, the accuracy of detection can be improved.

In the above-described embodiments, the lever member 10 serving as the first rotatable member is rotationally displace able in the counterclockwise and clockwise directions relative to the gear 20 serving as the second rotatable member. Therefore, the direction of the magnetic fluxes passing through the magnetic sensor 60 changes in accordance with the direction of a relative rotational angular displacement between the rotatable members. It may be conceivable that the output of the magnetic sensor 60 is used, via a control circuit (not shown), to control an electric motor (not shown) serving as an auxiliary power source. This can assist not only forward driving but also reverse driving in a power assist wheelchair.

The above-described embodiments illustrate an example case where the coil spring S is adopted as the elastic member, but instead, a various kinds of springs are adoptable. Alternatively, an elastic member such as a torsion bar made of any of a various kinds of resins and metals may be used to detect a relative rotational angular displacement of the first and second rotatable members, and thus a rotational torque. In the present invention, a permanent magnet having a cylindrical shape may be used as the permanent magnet.

As thus far described, in the embodiments of the present invention, the relative rotational angular displacement detection device X includes the permanent magnet 30, the magnetic flux guiding ring 40, the intermediate yoke 50, the magnetic sensor 60, and the back yoke 70. The permanent magnet 30 is fixed to the rotatable member 10 which is one of the pair of rotatable members, and includes the S-poles and N-poles that are magnetized in the axial direction of the shaft part 1 and arranged alternately in the circumferential direction.

The magnetic flux guiding ring 40 includes the annular ring body 41 and the plurality of protruding portions 42. The annular ring body 41 is fixed to the other of the pair of rotatable members 10 and 20, and arranged so as not to overlap the permanent magnet 30 when seen in the axial direction of the axis of rotation. The plurality of protruding portions 42 protrude from the ring body 41 in the radial direction of the shaft part 1, and arranged so as to overlap the permanent magnet when seen in the axial direction of the shaft part 1.

The intermediate yoke 50 is arranged close to the ring body 41 of the magnetic flux guiding ring 40, and the back yoke 70 cooperates with the intermediate yoke 50 to constitute the magnetic flux collecting circuit. The magnetic sensor 60 is arranged between the back yoke 70 and the intermediate yoke 50.

This configuration can ensure that a relative rotational angular displacement is detected with a simple structure. The magnetic sensor 60 senses magnetic fluxes passing through the magnetic flux collecting circuit constituted by the intermediate yoke 50 and the back yoke 70, without positively providing a magnetic closed loop circuit for the permanent magnet 30. This enables further simplification of the structure and simplification of manufacturing and assembling processes, thus achieving a cost reduction.

The magnetic sensing members are arranged so as to satisfy such a positional relation that, when the magnetic sensing members are rotationally moved in the circumferential direction relative to the ring body of the magnetic flux guiding ring under the state where the relative positions of the permanent magnet and the magnetic flux guiding ring relative to each other are maintained, the output waveform obtained by combining the outputs of the magnetic sensors has a lower amplitude than the amplitude of the output waveform of each magnetic sensor alone. Accordingly, the output waveform obtained by combining the outputs of the two magnetic sensors is flattened, which can reduce the risk of occurrence of erroneous detections. Thus, the accuracy of detection can be improved.

It should be understood that the terms and expressions used herein are for descriptions and have no intention to be construed in a limited manner, do not eliminate any equivalents of features shown and mentioned herein, and allow various modifications falling within the claimed scope of the present invention.

The present invention may be embodied in many different forms. The present disclosure is to be considered as providing examples of the principles of the invention. A number of illustrative embodiments are described herein with the understanding that such examples are not intended to limit the invention to preferred embodiments described herein and/or illustrated herein.

While some illustrative embodiments of the invention have been described herein, the present invention is not limited to the various preferred embodiments described herein. The present invention includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to."

### Industrial Applicability

The relative rotational angular displacement detection device according to the present invention is preferably adopted as a relative rotational angular displacement detection device configured to detect a relative rotational angular displacement of a pair of rotatable members that are rotatable relative to each other in the circumferential direction of the axis of rotation of a power assist wheelchair, a power assist bicycle, a power steering device of an automobile, or the like. The present invention is also preferably applied to a torque detection device or a torque control device including the relative rotational angular displacement detection device.

### Reference Signs List

- 1: shaft part
- 2: bearing
- 10: rotatable member (lever member)
- 11: engaging portion
- 12: projecting portion
- 20: rotatable member (gear)
- 21: slit
- 22: spring mounting hole
- 23: attachment
- 30: permanent magnet
- 40: magnetic flux guiding ring
- 41: ring body
- 42: protruding portion
- 50: intermediate yoke
- 51: facing portion
- 60: magnetic sensor
- 61: base plate
- 62: base plate holder
- 70: back yoke
- 80: non-rotatable member
- H: hand-rim coupling member
- R: axis of rotation
- S: coil spring
- Xa: magnetic sensing member
- Xb: magnetic sensing member

## Claims

1. A relative rotational angular displacement detection device, comprising:
a pair of rotatable members rotatable by 360 degrees about an axis of rotation, the rotatable members rotatable relative to each other about the axis of rotation in a circumferential direction;
a permanent magnet attached to one of the pair of rotatable members so as to rotate with the one rotatable member, the permanent magnet including magnetic poles arranged so as to alternate in polarity in the circumferential direction of the axis of rotation;
a magnetic flux guiding ring including a plurality of protruding portions and an annular ring body, the plurality of protruding portions arranged at positions facing the magnetic poles, the annular ring body attached to the other of the pair of rotatable members so as to rotate with the other rotatable member, the annular ring body arranged coaxially with the axis of rotation, the annular ring body magnetized with the strength of magnetization changing depending on the positions of the protruding portions relative to positions of the magnetic poles; and
a magnetic detection unit configured to detect magnetic fluxes of the ring body, the magnetic detection unit including
a first facing portion arranged to face a first part of the ring body and configured to receive magnetic fluxes of the first part of the ring body,
a second facing portion arranged at a position apart from the first facing portion with respect to the circumferential direction of the axis of rotation, the second facing portion configured to receive magnetic fluxes of a second part of the ring body,
a first magnetic sensor configured to detect the magnetic fluxes received by the first facing portion, and
a second magnetic sensor configured to detect the magnetic fluxes received by the second facing portion,
the first facing portion and the second facing portion configured such that their relative positions with respect to the circumferential direction of the axis of rotation are fixed independently of rotation of the permanent magnet and the magnetic flux guiding ring about the axis of rotation.

2. The relative rotational angular displacement detection device according to claim 1, wherein
the first facing portion and the second facing portion are arranged at such positions that the central angle formed between the first facing portion and the second facing portion satisfies a relational expression of [(the value in mechanical angle corresponding to one cycle in electrical angle of the permanent magnet) × N + (the value in mechanical angle corresponding to one cycle in electrical angle of the permanent magnet)/2, where N represents a positive integer].

3. The relative rotational angular displacement detection device according to claim 1, wherein
the magnetic detection unit includes M pieces of facing portions in addition to the first facing portion and the second facing portion,
the facing portions are arranged at such positions that the angle formed between adjacent ones of the facing portions satisfies a relational expression of [(the value in mechanical angle corresponding to one cycle in electrical angle of the permanent magnet) × N + (the value in mechanical angle corresponding to one cycle in electrical angle of the permanent magnet)/(2+M), where N and M represent positive integers].

4. The relative rotational angular displacement detection device according to any one of claims 1 to 3, wherein
the magnetic detection unit includes a first intermediate yoke and a second intermediate yoke, the first intermediate yoke arranged between the first magnetic sensor and the ring body so as to face the ring body, the second intermediate yoke arranged between the second magnetic sensor and the ring body so as to face the ring body,
the first facing portion is provided at the first intermediate yoke,
the second facing portion is provided at the second intermediate yoke,
the first magnetic sensor is configured to detect magnetic fluxes that are received by the first facing portion provided at the first intermediate yoke,
the second magnetic sensor is configured to detect magnetic fluxes that are received by the second facing portion provided at the second intermediate yoke.

5. The relative rotational angular displacement detection device according to any one of claims 1 to 4, wherein
the first facing portion includes a first magnetic flux collecting portion for collecting magnetic fluxes to the first magnetic sensor,
the second facing portion includes a second magnetic flux collecting portion for collecting magnetic fluxes to the second magnetic sensor.

6. The relative rotational angular displacement detection device according to claim 5, wherein
the first magnetic flux collecting portion and the second magnetic flux collecting portion are recessed portions recessed in a radial direction of the axis of rotation.

7. The relative rotational angular displacement detection device according to any one of claims 1 to 6, wherein
the magnetic detection unit includes a first averaging part for averaging the amplitude of magnetic fluxes flowing toward the first magnetic sensor, and a second averaging part for averaging the amplitude of magnetic fluxes flowing toward the second magnetic sensor.

8. The relative rotational angular displacement detection device according to any one of claims 1 to 7, wherein
the magnetic detection unit is configured to detect magnetic fluxes of the ring body based on magnetic fluxes detected by the first magnetic sensor and magnetic fluxes detected by the second magnetic sensor.

9. A torque detection device comprising:
the relative rotational angular displacement detection device according to any one of claims 1 to 8; and
an elastic member arranged between the pair of rotatable members, the elastic member configured to constantly give a biasing force in a relative rotation direction to the pair of rotatable members, wherein
the pair of rotatable members are provided with a relative rotation restriction part,
the relative rotation restriction part is configured to prevent rotation of the rotatable members relative to each other after either one of the pair of rotatable members is rotated relative to the other of the rotatable members through a predetermined rotational angle against the biasing force of the elastic member.

10. A torque control device comprising:
the relative rotational angular displacement detection device according to any one of claims 1 to 8;
a rotary driving member connected to either one of the pair of rotatable members, the rotary driving member configured such that a user gives a rotational force thereto;
a power source configured to give a rotational force to the other of the rotatable members; and
a control unit configured to control the rotational force given by the power source depending on an output of the magnetic detection unit in a state where the one of the rotatable members is relatively rotated through a predetermined rotational angle.

11. A power assist wheelchair comprising the torque control device according to claim 10.

12. A power assist straddle-type vehicle comprising the torque control device according to claim 10.

13. A power steering device comprising the torque control device according to claim 10.
